# EUROPÄISCHE PATENTSCHRIFT

(11) **EP 0 987 179 B1**
(45) Veröffentlichungstag und Bekanntmachung des Hinweises auf die Patenterteilung: **07.03.2007**
(21) Anmeldenummer: 99117193.5
(22) Anmeldetag: 01.09.1999
(51) Int. Cl.: B65B 57/14, B65B 35/50, B65B 35/04, B65G 47/91, B65G 47/82, B65G 57/04

(54) **Verfahren und Vorrichtung zur Übergabe von Packstücken an einer Stapelbildungsstelle**
Method and apparatus for transferring packages at a piling station
Procédé et installation pour transférer des emballages à une station d'empilage

(30) Priorität: 14.09.1998 DE 19841508
(43) Veröffentlichungstag der Anmeldung: 22.03.2000
(73) Patentinhaber: MediSeal GmbH, 33758 Schloss Holte-Stukenbrock (DE)
(72) Erfinder: Biehl, Johann, 76351 Linkenheim (DE); Gaus, Dieter, 33689 Bielefeld (DE); Kaplan, Horst, 33813 Oerlinghausen (DE); Knüppel, Jörg, 33415 Verl. (DE); Niessner, Eugen, 33619 Bielefeld (DE)
(74) Vertreter: Rehberg Hüppe + Partner

(56) Entgegenhaltungen:
- EP-A- 0 465 438
- EP-A- 0 602 682
- EP-A- 0 806 361
- EP-A- 0 842 878
- DE-A- 19 860 863

## Beschreibung

Die Erfindung betrifft ein Verfahren zur Übergabe von einzelnen Packstücken von einer Abnahmestelle an eine Stapelbildungsstelle, nach dem Oberbegriff des Anspruchs 1, sowie eine Vorrichtung zur Durchführung des Verfahrens, nach dem Oberbegriff des Anspruchs 5. Das Verfahren und die Vorrichtung können insbesondere dazu benutzt werden, um mit Tabletten gefüllte Blister als Packstücke von einer Stanze am Ende einer Thermoformmaschine als Abnahmestelle zu einer am Eingang einer Kartoniermaschine angeordneten Stapelstation zu fördern.

Ein einbahnig arbeitendes Verfahren und eine entsprechende Vorrichtung sind aus der DE 36 17 259 A1 oder auch EP 0 842 872 bekannt. Als Abnahmestelle ist das Ende einer ersten Packmaschine und als Stapelbildungsstelle der Beginn einer zweiten Packmaschine vorgesehen. Zwischen diesen beiden Packmaschinen ist eine Rotoren aufweisende Fördereinrichtung vorgesehen, wobei die Rotoren drei oder auch vier taktweise bewegbare Arme aufweisen können. Die Arme sind mit Saugern, Greifern o. dgl. bestückt und übernehmen jeweils ein Packstück von der Abnahmestelle und geben es an die Arme der anderen Rotoren weiter, bis das betreffende Packstück in den Stapelschacht der zweiten Packmaschine an einer Stapelbildungsstelle eingeführt wird. Die beiden Packmaschinen arbeiten bei der bekannten Vorrichtung im gleichen Takt, so daß beide Packmaschinen gleichzeitig einen Takt ausführen, unabhängig davon, ob ein ordnungsgemäßes Packstück übergeben wird oder nicht. Die Verpackungsanlage besitzt eine Einrichtung, mit deren Hilfe es möglich ist, Fehlpackungen auszuscheiden und an deren Stelle eine ordnungsgemäße Packung in den Förderfluß einzuschleusen. Zu diesem Zwecke ist dem letzten Rotor der Fördereinrichtung ein Vorratsschacht zugeordnet, in den mehrere ordnungsgemäße Packungen zu Beginn eines Arbeitszyklusses eingegeben und bevorratet werden. Der Vorratsschacht läßt sich also automatisch bis zum Erreichen einer vorgeschriebenen Mindestmenge an ordnungsgemäßen Packstücken füllen. Während des Betriebes wird der Vorratsschacht aufgefüllt, sobald eine vorgeschriebene Mindestanzahl von Einzelpackstücken im Vorratsschacht unterschritten wird. Obwohl die Übergabevorrichtung nur einbahnig ausgebildet ist, werden in nachteiliger Weise trotzdem eine relativ große Mindestanzahl von ordnungsgemäßen Packstücken in dem Vorratsschacht gespeichert, wobei die zuerst in den Vorratsschacht eingespeicherten ordnungsgemäßen Packstücke in der Regel bis zum Ende des Packungszyklusses gespeichert sind. Weiterhin ist nachteilig, daß beim Auffüllen bzw. Nachfüllen des Vorratsschachtes die zweite Packmaschine taktweise weiterläuft und insoweit mehr oder weniger große Lücken an der Stapelbildungsstation der zweiten Packmaschine entstehen können.

Aus einem Prospekt der Anmelderin HIGH-PERFORMANCE THERMO-FORMING LINE CP-12 AND P-4" mit dem Druckdatum 5/87, sind ein Verfahren und eine Vorrichtung der eingangs genannten Art bekannt. Die Abnahmestelle, die Fördereinrichtung und zumindest die Stapelbildungsstelle der nachgeschalteten Maschine sind zweibahnig arbeitend ausgebildet, so daß bei ordnungsgemäßem Verlauf zwei Packstücke nebeneinander gleichzeitig taktweise durch die Anlage laufen und jeweils auch zwei Packstücke gleichzeitig an der Stapelbildungsstelle nebeneinander gesammelt werden. Dabei wächst die Anzahl der Packstücke in den beiden Stapeln in der Regel gleichmäßig an. Wenn jedoch eine Fehlstelle im Bereich einer der beiden Bahnen auftritt, entsteht ein Übergabetakt zu der Stapelbildungsstation, bei dem nur eines der beiden Packstücke übergeben wird. Dabei wird dann zwangsläufig die Anzahl der in dem einen Stapel abgelegten Packstücke um 1 erhöht, während die Anzahl der Packstücke in dem anderen Stapel unverändert bleibt. Die Bildung solcher ungleichmäßig hoher Stapel ist in höchstem Maße unerwünscht, weil dies eine ordnungsgemäße getaktete Weiterverarbeitung der gebildeten Stapel in der nachgeschalteten Maschine behindert. Mit dieser bekannten Vorrichtung ist es somit zwar möglich, nicht ordnungsgemäße Packstücke auszusondern. Die Bedingung, an der Stapelbildungsstation stets gleich hohe Stapel von Packstücken zu bilden, kann dabei nicht eingehalten werden. Um diese letzte Forderung zu erfüllen, ist es aus dem oben genannten Prospekt bekannt, einem Rotor der Fördereinrichtung für jede Bahn je einen Vorratsschacht zuzuordnen. Beide Vorratsschächte sind mit ordnungsgemäßen Packstücken vorbefüllbar, um Fehlstellen zu ergänzen. Die zum Ausgleich von Fehlstellen bestimmten ordnungsgemäßen Packstücke werden relativ lange in dem Vorratsschacht aufbewahrt, bis eine Fehlstelle auftritt. Die Eigenschaften dieser im Vorratsschacht befindlichen Packstücke, insbesondere ihre Durchbiegung, können sich durch die lange Lagerzeit im Vorratsschacht oder durch die Entnahme von ordnungsgemäßen Packstücken aus anderen Herstellprozessen gegenüber den aktuell zu verpackenden ordnungsgemäßen Packstücken ändern oder geändert haben, so daß es beispielsweise Schwierigkeiten bereitet, aktuelle ordnungsgemäße Packstücke und aus dem Vorratsschacht entnommene Packstücke gleichmäßig in einem Stapel zu vereinigen, derart, daß ein Stapel derartiger Packstücke problemlos in einen Umkarton einschiebbar ist. Auch ein Chargenwechsel und auch ein Formatwechsel bereiten Schwierigkeiten. Auch können die Vorratsschächte ihre Funktion nur dann erfüllen, wenn eine vorher festgelegte Anzahl zwischengespeicherter Packstücke vorhanden ist.

Aus der EP 0 806 361 A1 ist eine Vorrichtung zum paarweisen Ablegen von Packstücken in einen Karton bekannt. Die Packstücke, beispielsweise mit Kartoffelchips befüllte und gesiegelte Schlauchbeutel, werden einbahnig erzeugt und mit einer Fördereinrichtung nach nicht beschriebenen Kriterien auf zwei Bahnen aufgeteilt, wobei gleichzeitig fehlerhafte Packstücke festgestellt und ausgeschleust werden. Fehlstellen auf den beiden Bahnen werden vermieden. Fehlerhafte Packstücke werden nicht durch zwischengespeicherte Packstücke ersetzt, sondern nachfolgende ordnungsgemäße Packstücke nehmen die Stellen fehlerhafter Packstücke ein. Die ordnungsgemäßen Packstücke in den beiden Bahnen werden aufgestaut und erst dann gemeinsam weitertransportiert, wenn eine bestimmte Anzahl Packstücke vor der Staustelle aufgelaufen sind. Auf diese Weise werden immer zwei ordnungsgemäße Packstücke gemeinsam in den Karton überführt. Es soll so möglich sein, nur ordnungsgemäße Packstücke kontinuierlich zu verpacken.

Der Erfindung liegt daher die Aufgabe zugrunde, ein Verfahren und eine Vorrichtung der eingangs beschriebenen Art bereitzustellen, die bei zwei- und mehrbahniger Arbeitsweise einsetzbar sind, bei denen Fehlstellen ausgeglichen und ordnungsgemäße Packstücke in einer vorzugsweise der Anzahl der Bahnen entsprechenden Anzahl von Stapeln unter Einhaltung zu jedem Zeitpunkt gleicher stapelhöhe in allen Stapeln abgelegt werden können, wobei ordnungsgemäße Packstücke in möglichst geringer Anzahl und unter Vermeidung von Zwischenstapeln handhabbar sein sollen.

Gelöst wird diese Aufgabe durch ein Verfahren mit den Merkmalen nach Anspruch 1 bzw. durch eine Übergabevorrichtung mit den Merkmalen nach Anspruch 5.

Die Erfindung geht von dem Gedanken aus, die mehrbahnig reihenweise an der Abnahmestelle zugeführten Packstücke zunächst auch mehrbahnig reihenweise in einer Übergabevorrichtung weiterzubefördern. Vor der Abnahmestelle oder auch im Bereich der Förderung der Packstücke durch die Übergabevorrichtung können die Packstücke beobachtet bzw. überwacht werden, um das Auftreten einer Fehlstelle festzustellen. Eine solche Fehlstelle kann entweder von einem Leerblister oder einem sonstigen Fehlblister, der beispielsweise nicht vollständig befüllt ist, repräsentiert werden. In all diesen Fällen handelt es sich um ein nicht ordnungsgemäßes Packstück, welches entweder ausgesondert wurde oder ausgesondert wird. Es versteht sich, daß die Aussonderung erfolgen muß, bevor dieses nicht ordnungsgemäße Packstück zu der Stapelbildungsstelle gelangen könnte. Wenn ein solches nicht ordnungsgemäßes Packstück ausgesondert ist, ist in der Regel in der anderen Bahn ein ordnungsgemäßes Packstück vorhanden. Dieses ordnungsgemäße Packstück wird nun im Förderweg der Übergabevorrichtung zwischengespeichert. Die Zwischenspeicherung erfolgt immer dann, wenn der Zwischenspeicher vorher leer war. Ist dagegen der Zwischenspeicher mit einem bereits vorher zwischengespeicherten Packstück belegt, kann dieses zwischengespeicherte Packstück zum Ausgleich der Fehlstelle in den Förderfluß der Packstücke eingeschleust werden. Dies geschieht jedoch nur, wenn dabei gleichzeitig eine vollständige Reihe von ordnungsgemäßen Packstücken nebeneinander gebildet werden kann. Auf diese Weise werden entweder nur vollständige Reihen ordnungsgemäßer Packstücke an der Stapelbildungsstelle aufgesammelt, oder es werden keinerlei zu einer Reihe gehörende Packstücke an der Stapelbildungsstelle abgegeben, d. h. die Übergabevorrichtung übt zu dem betreffenden Zeitpunkt an der Stapelbildungsstelle eine Leer-Förderung aus. Damit wird aber letztendlich sichergestellt, daß an der Stapelbildungsstelle nur gleichmäßig wachsende Stapel entstehen können, die zudem nur ordnungsgemäße Packstücke enthalten.

Die Erfindung läßt sich für alle Anwendungsfälle einsetzen, bei denen an der Abnahmestelle Packstücke mehrbahnig nebeneinander reihenweise anfallen. Besonders einfach läßt sich die Erfindung überblicken, wenn sie auf eine zweibahnige Zufuhr von Packstücken angewendet wird. Es sind also nur zwei nebeneinander befindliche Bahnen vorhanden, die taktweise arbeiten. Jede Reihe von Packstücken besteht damit nur aus zwei Stück, und es gibt nur drei unterschiedliche Fehler. Entweder tritt eine Fehlstelle an einer Reihe Packstücke an der einen Bahn oder an der anderen Bahn oder gleichzeitig an beiden Bahnen auf. Der vierte mögliche Fall stellt die Möglichkeit dar, daß zwei ordnungsgemäße Packstücke auf den beiden Bahnen nebeneinander in einer Reihe gleichzeitig erscheinen. Die Behandlung dieser zwei ordnungsgemäßen Packstücke in einer Reihe ist problemlos. Die beiden ordnungsgemäßen Packstücke werden von der Übergabevorrichtung parallel zueinander gefördert und gleichzeitig in je einem Stapel an der Stapelbildungsstelle abgelegt. Tritt eine Fehlstelle in nur einer Bahn auf, erfolgt eine Abfrage, ob der Speicherplatz der Zwischenspeicherstation mit einem ordnungsgemäßen Packstück belegt ist oder nicht. Wenn dieser Platz belegt ist, wird dieses ordnungsgemäße Packstück in den Förderfluß derart eingeschleust, daß sich eine Reihe aus zwei ordnungsgemäßen Packstücken ergibt. Zu diesem Zweck muß unter Umständen ein Bahnwechsel durchgeführt werden. Ist dagegen der Speicherplatz der Zwischenspeicherstation leer, dann wird das ordnungsgemäße Packstück der Reihe an dem Zwischenspeicherplatz aufgenommen, und es entsteht in der Übergabevorrichtung eine komplett leere Reihe, die einen Leerhub gegenüber der Stapelbildungsstelle ausführt. Bei der dritten möglichen fehlerhaften Situation, wenn also eine vollständige Reihe aus zwei fehlerhaften Packstücken ankommt, werden diese Packstücke ausgesondert, und die Übergabevorrichtung führt auch hier einen Leerhub gegenüber der Stapelbildungsstelle aus. Die Zwischenspeicherstation bleibt in diesem Falle außer Tätigkeit.

Das erfindungsgemäße Verfahren beinhaltet eine Reihe von Vorteilen:
Durch das Entstehen gleich hoher Stapel und das gleichzeitige Erreichen der vollen Stapelhöhe entstehen an der Stapelbildungsstation immer nur komplette Stapel, die zu gleicher Zeit komplett werden, so daß die Weiterverarbeitung dieser Stapel einfach wird. Diese mehreren Stapel können entweder gleichzeitig gehandhabt, zu einer Reihe gruppiert oder anderweitig weiterverarbeitet, beispielsweise in einen Umkarton eingeschoben werden. Das erfindungsgemäße Verfahren beseitigt weiterhin einen leistungsbegrenzenden Engpaß in der kompletten Maschine bzw. Anlage. Mit besonderem Vorteil kann das Verfahren und die Übergabevorrichtung an einer Tiefziehverpackungsanlage eingesetzt werden, mit der insbesondere Tabletten verpackt werden, wobei Blisterpackungen erzeugt, befüllt, gedeckelt, gestanzt, gestapelt und als Stapel in einen Umkarton verbracht werden. Es versteht sich, daß eine solche Tiefziehverpackungsanlage noch weitere spezielle Arbeitsschritte ermöglichen kann. Die Anwendung des neuen Verfahrens führt dazu, daß Bereiche der Tiefziehverpackungsanlage vorteilhaft vergleichsweise langsam laufen können, wie es für den betreffenden Bearbeitungsschritt sinnvoll oder erforderlich ist, und zwar trotz hoher Gesamtleistung der Anlage. Ein ganz wesentlicher Vorteil des neuen Verfahrens besteht darin, daß die Zwischenspeicherung nur kurzzeitig erfolgt und die Anzahl der zwischengespeicherten ordnungsgemäßen Packungen sehr gering ist. Bei einer zweibahnigen Ausführung wird zu keinem Zeitpunkt mehr als eine ordnungsgemäße Packung zwischengespeichert. Auch erfolgt eine weitere Zwischenspeicherung einer ordnungsgemäßen Packung immer erst dann, wenn die vorher zwischengespeicherte Packung in den Förderfluß wieder eingeschleust worden ist. Damit wird der Gefahr von negativen Schrumpfungsauswirkungen an einem Packstück entgegengewirkt. Weiterhin ist wesentlich, daß jedes ordnungsgemäße Packstück während der Förderung durch die Übergabevorrichtung zu jedem Zeitpunkt geführt und gehalten ist. Es tritt nie ein Zustand ein, bei welchem ein ordnungsgemäßes Packstück alleine dem Einfluß von Schwerkraft unterliegt. Dies bedeutet, daß die Förder- und Arbeitsgeschwindigkeiten erhöht werden können und die ordnungsgemäßen Packstücke sehr sicher und zuverlässig gefördert werden. Das erfindungsgemäße Verfahren erbringt bereits Vorteile bei einer zweibahnigen Anlage. Es ist jedoch grundsätzlich ausdehnungsfähig auf Anwendungsfälle, die mehr als zwei Bahnen aufweisen.

Beim Auftreten von mindestens zwei Fehlstellen nacheinander in einer der Bahnen wird das ordnungsgemäße zwischengespeicherte Packstück aus der die erste Fehlstelle enthaltenden Bahn unter Bahnwechsel quer zur Förderrichtung der Packstücke bewegt und in die die zweite Fehlstelle aufweisende Bahn unter Bildung einer vollständigen Reihe eingeschleust. Dies gilt sowohl für den Fall, daß zwei Fehlstellen in unmittelbarer Folge nacheinander auftreten, als auch für den Fall, daß die beiden Fehlstellen in der gemeinsamen Bahn von ordnungsgemäß besetzten Reihen getrennt sind. In diesen Fällen wird es erforderlich, einen Bahnwechsel mit dem zwischengespeicherten ordnungsgemäßen Packstück zu realisieren, weil es in der anderen Bahn zur Bildung einer vollständigen Reihe benötigt wird. Dies gilt unmittelbar für zweibahniges Arbeiten. Wenn mehr als zwei Bahnen vorhanden sind, werden Zwischenschritte eingebaut, die sich danach richten, ob eine leere Reihe bzw. eine volle Reihe ordnungsgemäßer Packstücke erzeugt werden kann.

Bei zweibahniger Zufuhr der Packstücke zu der Abnahmestelle wird nur ein ordnungsgemäßes Packstück zwischengespeichert und beim Auftreten der nachfolgenden Fehlstelle sogleich dann zum Ausgleich dieser Fehlstelle und damit unter Bildung einer vollständigen Reihe aus zwei Packstücken in den Förderfluß der Packstücke eingeschleust. Die Zeit der Zwischenspeicherung eines ordnungsgemäßen Packstückes dauert also immer nur so lange, bis eine nachfolgende Fehlstelle auftritt, gleichgültig in welcher der beiden Bahnen. Der Speicherplatz der Zwischenspeicherstation kennt nur zwei Zustände. Entweder ist dort ein ordnungsgemäßes Packstück zwischengespeichert, oder der Speicherplatz ist leer. Ein solcher Zwischenspeicher unterscheidet sich grundsätzlich von einem Vorratsschacht, in welchem eine Vielzahl ordnungsgemäßer Packstücke bevorratet bzw. gespeichert sind, die sehr unterschiedlichen Verweilzeiten in einem solchen Vorratsschacht unterliegen. Bei dem neuen Verfahren sind die Verweilzeiten relativ kurz. Sie richten sich nach der zeitlichen Folge, mit der Fehlstellen auftreten bzw. ausgeglichen werden müssen. Das neue Verfahren kann z. B. bei zweibahniger Arbeitsweise auch dann eingesetzt werden, wenn nur auf der einen Bahn ordnungsgemäße Packstücke anfallen und die zweite Bahn komplett leer ist. In diesem Falle arbeitet zwar die Zwischenspeicherstation von Takt zu Takt. An der Stapelbildungsstelle tritt alternierend immer ein Ablegetakt und ein Leertakt auf.

Bei mindestens dreibahniger Zufuhr der Packstücke zu der Abnahmestelle werden ein oder mehrere ordnungsgemäße Packstücke zwischengespeichert. Beim Auftreten von nachfolgenden Fehlstellen wird bzw. werden ordnungsgemäße Packstücke entweder zum Ausgleich dieser Fehlstelle und damit unter Bildung einer vollständigen Reihe aus mehreren Packstücken in den Förderfluß der Packstücke eingeschleust, oder, wenn die Bildung einer vollständigen Reihe nicht möglich ist, unter Erzeugung einer Leerreihe das oder die ordnungsgemäßen Packstücke zwischengespeichert. Bei einer solchen dreibahnigen Zufuhr steigt die Anzahl und die Lage der möglichen Fehlstellen. Hier gibt es insgesamt sieben fehlerhafte Situationen, die durch unterschiedliche Arbeitsschritte ausgeglichen werden, je nach dem, ob der Schritt der Zwischenspeicherung die Erzeugung einer kompletten Leerreihe oder der Schritt der Einschleusung die Erzeugung einer komplett vollen Reihe ermöglicht. Es ist aber auch hier leicht überschaubar, daß bei dreibahniger Arbeitsweise maximal zwei ordnungsgemäße Packstücke zwischengespeichert werden. Generell gilt, daß die Anzahl der maximal zwischengespeicherten Packstücke um 1 kleiner ist als die Anzahl der Bahnen. Der erforderliche Bahnwechsel muß hier so gestaltet werden, daß jeder Speicherplatz einen Bahnwechsel derart ausführen kann, daß jede Bahn erreichbar ist

Die Übergabevorrichtung, die im wesentlichen aus einer Fördereinrichtung und den entsprechenden Stationen besteht, weist die bereits hinsichtlich des Verfahrens angegebenen Vorteile auf. Ergänzend kommt noch hinzu, daß die Zwischenspeicherstation relativ einfach aufgebaut sein kann, weil die Anzahl der zwischengespeicherten ordnungsgemäßen Packstücke vorteilhaft sehr gering ist. Die Zwischenspeicherstation bietet auch die Möglichkeit, die Packstücke zu führen und zu halten, so daß sie nie alleine einem Schwerkrafteinfluß unterworfen sind. Hierdurch steigt die Zuverlässigkeit der Förderung. Die Fördereinrichtung sollte mindestens einen Rotor aufweisen, der mit einem oder mehreren Armen besetzt ist, an deren freien Enden wiederum Greifer, Sauger oder ähnliche Elemente vorgesehen sind, um die Packstücke aufzunehmen, zu halten, zu führen und zu fördern. Eine solche Fördereinrichtung besitzt selbst eine wesentlich kürzere Baulänge als z. B. ein Förderband, auf dem Packstücke in Magazinen bewegt werden. Die kurze Baulänge der Fördereinrichtung trägt auch dazu bei, daß die gesamte Übergabevorrichtung wesentlich kürzer und gedrungener gebaut werden kann, als dies im Stand der Technik möglich ist. Für die Realisierung der Übergabevorrichtung gibt es mehrere Möglichkeiten, beispielsweise wie die Fördereinrichtung im einzelnen auszubilden ist. Sinnvoll ist die Anwendung mindestens eines Rotors, wobei aber der Rotor beispielsweise eine Anzahl von Armen aufweist, die mehr oder weniger gleichzeitig in nacheinandergeschalteten Schritten zum Einsatz kommen und mit denen eine Anzahl Stationen angefahren bzw. durchlaufen werden kann. Die grundsätzliche Ausbildung der Fördereinrichtung und die Anzahl der Bahnen sind an sich ohne Einfluß aufeinander. Freilich muß die Fördereinrichtung für jede Bahn mit Saugern, Greifern oder ähnlichen Elementen ausgestattet sein. Ein bedingter Zusammenhang, wenngleich auch nicht zwingend, besteht zwischen der Anzahl der Arme der Fördereinrichtung und der Anzahl der zu durchlaufenden Stationen. Eine bevorzugte Ausführungsform sieht als Fördereinrichtung einen Rotor mit drei Armen vor, der insgesamt vier unterschiedliche Stationen anfahren kann. Grundsätzlich kann auch eine Freistation vorgesehen sein oder diese durch einen Schacht besetzt werden, der das manuelle Rückschleusen ordnungsgemäßer Packstücke in den Förderfluß ermöglicht. Wenn dieser Vorratsschacht im Förderfluß vor der Zwischenspeicherstation angeordnet ist, genügt die Anbringung eines einzigen vorratsschachtes unabhängig von der Mehrbahnigkeit der Anlage.

Generell gilt, daß die Anzahl der Speicherplätze der Zwischenspeicherstation um 1 kleiner ist als die Anzahl der Bahnen quer zur Förderrichtung. Dies zielt natürlich auch darauf hin, so wenig wie möglich Speicherplätze vorzusehen und auch so wenig wie möglich zwischenzuspeichern.

In einer bevorzugten Ausführungsform weist der Rotor der Fördereinrichtung mindestens drei mehrbahnig arbeitende Arme auf, die gleichmäßig verteilt über den Umfang des Rotors angeordnet sind. Jeder Arm kommt beim Umlauf des Rotors in der Folge nacheinander mit der Abnahmestation, der Zwischenspeicherstation und der Stapelbildungsstation in Wirkkontakt. Es ist aber auch möglich, die Anzahl der Arme an dem Rotor zu variieren. Auch für die genaue getriebliche Ausbildung des Rotors gibt es mehrere Möglichkeiten.

Die Steuereinrichtung zum gesteuerten Abstimmen der Bewegungen der Zwischenspeicherstation, der Fördereinrichtung und der Stapelbildungsstation ist so ausgebildet, daß beim Zusammenspiel zwischen der Fördereinrichtung und der Stapelbildungsstation entweder nur eine vollständige Reihe von Packstücken bei jedem Takt der Fördereinrichtung gemeinsam übergeben oder bei einem Takt keinerlei Packstücke übergeben werden, wobei in letzterem Fall die Steuereinrichtung das Weiterschalten eines Taktes der Stapelbildungsstation unterdrückt. Die Abnahmestelle einerseits und die Stapelbildungsstation andererseits sind - im Gegensatz zum Stand der Technik - nicht durch einen gemeinsamen Arbeitstakt verbunden, sondern arbeiten weitgehend unabhängig voneinander. Wenn keinerlei Packstücke übergeben werden, wird der betreffende an sich vorgesehene Takt der Stapelbildungsstation und der sich anschließenden Anlage unterdrückt.

Es kann ein Nachlegeschacht zum manuellen Einführen von ordnungsgemäßen Packstücken vorgesehen sein. Ein solcher Nachlegeschacht dient dem Rückschleusen ordnungsgemäßer Packstücke. Der Nachlegeschacht ist unabhängig von der Mehrbahnigkeit nur einfach erforderlich, da er zweckmäßig mit der Zwischenspeicherstation zusammenarbeitet und insoweit über diese sämtliche Bahnen erreichbar sind.

Mit der Einrichtung zum Erkennen einer Fehlstelle können eine Mehrzahl von Funktionen überwacht werden. Die Aussonderung von Leer- und Fehlpackungen kann vor der Abnahmestation, aber auch nach der Abnahmestation, also im Bereich der Fördereinrichtung, erfolgen. Mit besonderem Vorteil ist der Fördereinrichtung eine Auswurfstation zum Abwerfen von Leer- und Fehlpackungen zugeordnet. Eine solche Abwurfstation läßt sich ebenfalls im Bereich des Rotors anordnen und anbringen, wobei es lediglich erforderlich ist, die Greifer oder Sauger entsprechend steuern zu können. Der Abwurf der Fehlpackungen kann während der Förderbewegung von einer zur nächsten Station, also in einer Zwischenposition erfolgen, beispielsweise zwischen der Abnahmestation und der Zwischenspeicherstation. Es ist auch möglich, Leerpackungen einerseits und Fehlpackungen andererseits voneinander zu trennen, um beispielsweise die in Fehlpackungen enthaltenen Tabletten wiedergewinnen und in den Verpackungsvorgang rückschleusen zu können.

Die Erfindung wird anhand bevorzugter Ausführungsbeispiele weiter erläutert und beschrieben. Es zeigen:
- Fig. 1: eine Seitenansicht der Übergabevorrichtung mit der Fördereinrichtung und der Verdeutlichung der wesentlichen Stationen,
- Fig. 2: eine schematische Darstellung des Förderweges der Packstücke einer zweibahnigen Übergabevorrichtung,
- Fig. 3: eine schematische Darstellung des Förderweges der Packstücke einer dreibahnigen Übergabevorrichtung,
- Fig. 4: eine andere Anordnungsmöglichkeit der Zwischenspeicherstation einer dreibahnigen Übergabevorrichtung,
- Fig. 5: eine erste Anordnungsmöglichkeit an einer vierbahnigen Anlage,
- Fig. 6: eine zweite Anordnungs- und Ausbildungsmöglichkeit der Zwischenspeicherstation für eine vierbahnige Anlage und
- Fig. 7: eine dritte Ausführungsmöglichkeit der Zwischenspeicherstation für eine vierbahnige Anlage.

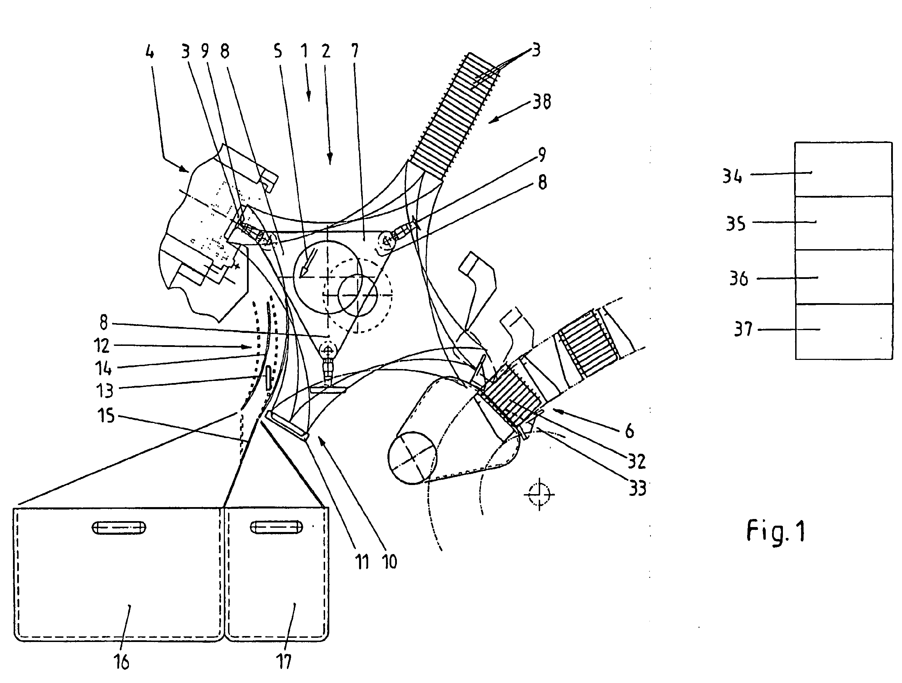

In Fig. 1 sind die wesentlichen Elemente einer Übergabevorrichtung 1 in einer Seitenansicht angedeutet. Zentraler Bestandteil der Übergabevorrichtung 1 ist eine Fördereinrichtung 2, die dem Transport von Packstücken 3 dient. Die Packstücke 3 fallen an einer Abnahmestation 4 an, werden dort von der Fördereinrichtung 2 übernommen und in durch einen Pfeil angedeuteten Förderrichtung 5 letztlich zu einer Stapelbildungsstation 6 gefördert und dort abgelegt. Zu diesem Zweck weist die Fördereinrichtung 2 einen Rotor 7 etwa in dreieckförmiger Gestalt auf, der an seinen drei Ecken jeweils einen Arm 8 trägt. Jeder Arm 8 ist mit Saugern 9 besetzt, die dem Aufnehmen bzw. Abgeben der Packstücke 3 dienen. Statt der Sauger 9 können auch andere Greifelemente angeordnet sein. Diese richten sich nach der Art der Packstücke 3 und der Möglichkeit, wie diese ergriffen, weitertransportiert und wieder abgegeben werden können. Über den Umfang des Rotors 7 bzw. der Fördereinrichtung 2 verteilt sind nicht nur die Abnahmestation 4 und die Stapelbildungsstation 6 vorgesehen, sondern noch eine Zwischenspeicherstation 10, die im Förderfluß gemäß Förderrichtung 5 zwischen der Abnahmestation 4 und der Stapelbildungsstation 6 angeordnet ist. Diese Zwischenspeicherstation 10 weist in der einfachsten Ausführungsform eine Kassette auf, die einen Speicherplatz 11 bildet, an dem ein einziges ordnungsgemäßes Packstück 3 aufgenommen und damit zwischengespeichert werden kann. Zwischen der Abnahmestation 4 und der Zwischenspeicherstation 10 kann eine Auswurfstation 12 für Fehlpackungen 13 vorgesehen sein. Zu der Auswurfstation 12 gehören verstellbare Leitschächte 14 und 15 sowie ein Behälter 16 zur Aufnahme von Leerpackungen und ein Behälter 17 zur Aufnahme von z. B. nur teilweise befüllten Fehlpackungen 13. Die Auswurfstation 12 ermöglicht eine Trennung dieser beiden Arten von Fehlpackungen 13. Hierauf kommt es jedoch im Rahmen der Erfindung nicht an. Wesentlich ist nur, daß an irgendeiner Stelle entweder im Bereich der Fördereinrichtung 2 oder auch wahlweise vor der Abnahmestation 4 ein Ausscheiden von Fehlpackungen 13 erfolgt, so daß im Förderfluß an der Stapelbildungsstation 6 nur ordnungsgemäße Packstücke 3 ankommen.

Auch die Ausbildung der Abnahmestation 4 im einzelnen sowie der Stapelbildungsstation 6 im einzelnen ist für die Erfindung an sich belanglos. Die Abnahmestation 4 kann, wie in Fig. 1 dargestellt, aus einer Stanze bestehen, mit der ordnungsgemäße Packstücke 3 in Form der bekannten Blisterpackungen für Tabletten aus einem Band einer Tiefziehverpackungsanlage ausgestanzt werden. In der einfachsten Ausführungsform kann die Abnahmestation 4 auch aus einem Förderband oder einem anders gestalteten Förderer bestehen, mit welchem Packstücke 3 der Übergabevorrichtung 1 zugeführt werden.

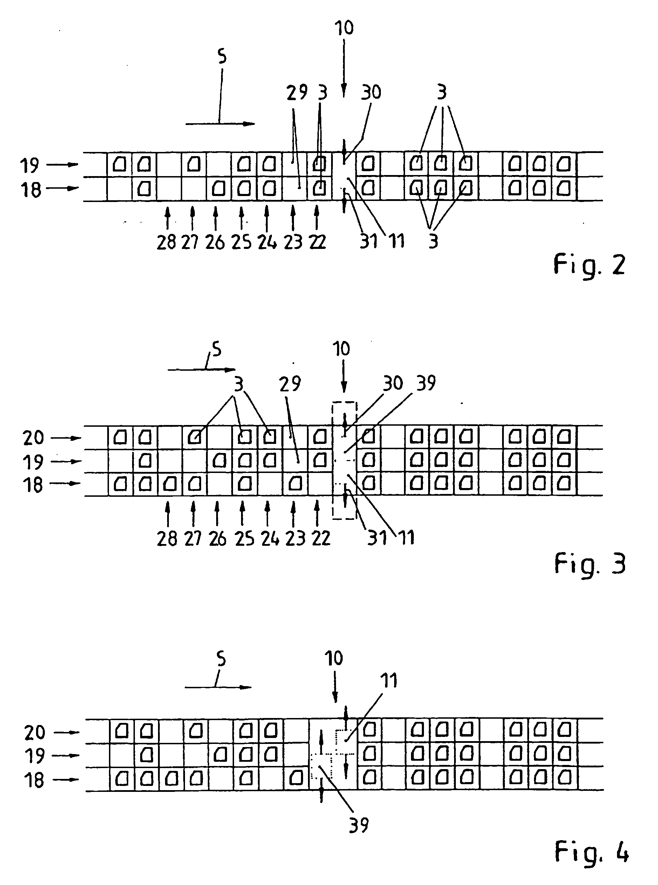

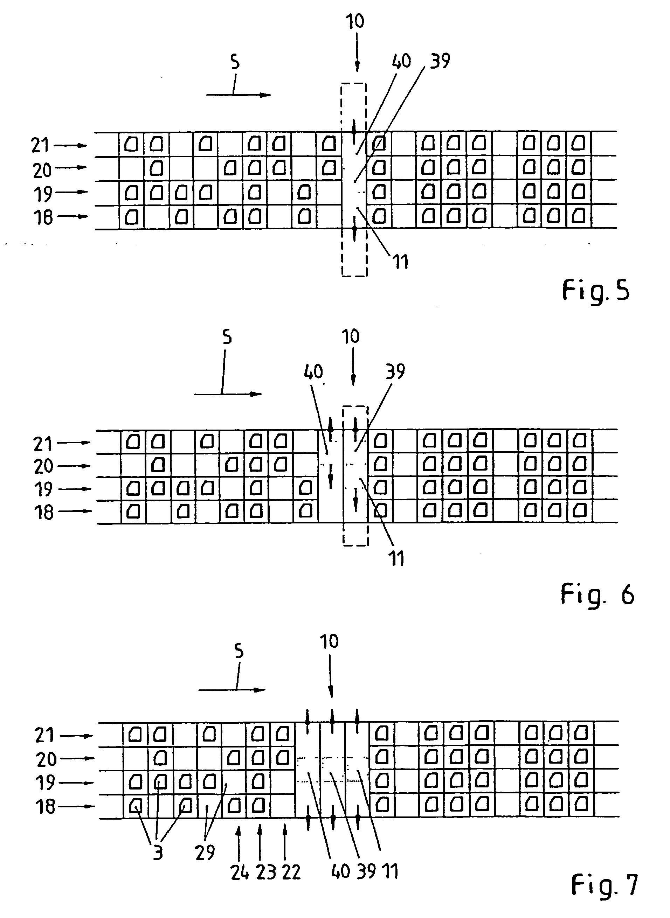

Die für die vorliegende Erfindung wichtige Besonderheit der Abnahmestation 4 und der Übergabevorrichtung 1 ist darin zu sehen, daß diese mehrbahnig ausgebildet sind. Unter dieser Mehrbahnigkeit wird mindestens eine Zweibahnigkeit verstanden, es müssen also mindestens zwei Bahnen 18 und 19 (Fig. 2) nebeneinander vorgesehen sein. Bei dreibahniger Ausbildung (Fig. 3 und 4) kommt noch die Bahn 20, bei vierbahniger Ausbildung (Fig. 5 bis 7) zusätzlich noch die Bahn 21 hinzu. Die Fig. 2 bis 7 dienen nur dazu, dies prinzipiell zu verdeutlichen. Die Erfindung läßt sich auch für Anwendungsfälle mit mehr als vier Bahnen nebeneinander anwenden und ausbilden. In Fig. 1 läßt sich die Mehrbahnigkeit schlecht verdeutlichen. Es ist aber vorstellbar, daß sich beispielsweise die erste Bahn 18 in der Zeichenebene der Fig. 1 bewegt, während die zweite Bahn 19 in einer zur Zeichenebene parallelen Ebene, die dahinter liegt, vorgesehen ist. Eine im einfachsten Fall zweibahnig ausgebildete Abnahmestation 4 weist also zwei Packstücke 3 auf gleicher Höhe im Förderfluß auf, deren Umrisse sich in der Seitenansicht gemäß Fig. 1 decken. Im einfachsten Fall ist ein Förderband anstelle der Abnahmestation 4 vorstellbar, auf dem zwei Packstücke 3 nebeneinander liegen und dabei eine sich quer zur Förderrichtung 5 erstreckende Reihe 22 (Fig. 2) bilden. Um unterschiedliche Reihen voneinander differenziert beschreiben zu können, sind in Fig. 2 die Reihen 22 bis 28 mit den ersichtlichen Bezugszeichen versehen, wie sie in Förderrichtung 5 bei einer zweibahnigen Anlage mit den Bahnen 18 und 19 zeitlich nacheinander anfallen. Man erkennt, daß die Reihe 22 ordnungsgemäß und vollständig mit ordnungsgemäßen Packstücken 3 besetzt ist, d. h. in der gemeinsamen Reihe 22 trägt sowohl die Bahn 18 als auch die Bahn 19 ein ordnungsgemäßes Packstück 3, so daß die Reihe 22 vollständig mit ordnungsgemäßen Packstücken besetzt ist. Zur leichteren Darstellung sind in Fig. 2 nur ordnungsgemäße Packstücke 3 dargestellt, während Fehlpackungen 13 nicht dargestellt, sondern durch Fehlstellen 29 verdeutlicht sind. Die in Förderrichtung 5 der Reihe 22 nachfolgende Reihe 23 besitzt also zwei Fehlstellen 29, d. h. an dem vorgesehenen Platz befindet sich weder auf der Bahn 18 noch auf der Bahn 19 ein ordnungsgemäßes Packstück 3. Diese Fehlstellen 29 können aufgrund verschiedener Ursachen verstanden sein. Entweder kann auf der betreffenden Bahn an der Abnahmestation 4 ein Packstück 3 bereits von Anfang an gefehlt haben, oder aber es wurde an dieser Stelle eine Fehlpackung 13 plaziert, die bereits ausgesondert wurde, beispielsweise durch die Abwurfstation 12. Fig. 2 zeigt das sich im Förderfluß gemäß Förderrichtung 5 der Zwischenspeicherstation 10 darstellende Bild. Die Zwischenspeicherstation 10 ist nur hinsichtlich ihres Speicherplatzes 11 angedeutet, wobei durch Pfeile 30 und 31 angedeutet ist, daß der Speicherplatz 11 der zwischenspeicherstation 10 quer zur Förderrichtung 5 und damit senkrecht zur Zeichenebene der Fig. 1 verfahrbar ist. Der Speicherplatz 11 nimmt in der Realität an sich niemals die in Fig. 2 dargestellte Zwischenstellung ein, sondern er befindet sich entweder bewegt gemäß Pfeil 30 fluchtend zu der Bahn 19 oder bewegt gemäß Pfeil 31 fluchtend zu der Bahn 18.

Die Reihen 22 bis 28 usw. rücken taktweise beim Arbeiten der Fördereinrichtung 2 relativ zu der Zwischenspeicherstation 10 vor, wobei die Zwischenspeicherstation 10 nicht in Tätigkeit tritt, wenn entweder, wie dargestellt, vollständig mit ordnungsgemäßen Packstücken 3 befüllte Reihen 22, 24 und 25 anfallen und über die Zwischenspeicherstation 10 hinweg zu der Stapelbildungsstation 6 befördert werden. Auch wenn eine Reihe 23 mit zwei Fehlstellen auftritt, tritt die Zwischenspeicherstation 10 nicht in Wirktätigkeit. Die Zwischenspeicherstation 10 erbringt erstmals eine Tätigkeit, wenn die Reihe 26 durch einen Arm 8 der Fördereinrichtung 2 gefördert wird. In der Reihe 26 ist die Bahn 18 mit einem ordnungsgemäßen Packstück 3 belegt, während in der daneben befindlichen Bahn 19 eine Fehlstelle 29 auftritt. In diesem Fall wird der Speicherplatz 11 der Zwischenspeicherstation 10 gemäß Pfeil 31 in Flucht zu der Bahn 18 gebracht, falls er im Arbeitsfluß nicht ohnehin bereits an dieser Stelle steht. Das ordnungsgemäße Packstück 3 der Bahn 18 der Reihe 26 wird in dem Speicherplatz 11 der Zwischenspeicherstation 10 aufgenommen, so daß nun aus der Reihe 26 eine Reihe geworden ist, die das Aussehen der Reihe 23 aufweist, nämlich zwei Fehlstellen 29. Solche Reihen, die vollständig durchgehend Fehlstellen aufweisen, sind in Fig. 2 rechts von der Zwischenspeicherstation 10 erkennbar, und zwar wie sie letztendlich der Stapelbildungsstation 6 zugeführt werden.

Wenn sich nun die Reihe 27 der Zwischenspeicherstation 10 nähert, liegt der umgekehrte Fehlerfall vor. Die Bahn 18 der Reihe 27 besitzt hier eine Fehlstelle 29, während die Bahn 19 der Reihe 27 ein ordnungsgemäßes Packstück 3 aufweist. Um diesen Fehler zu korrigieren, wird nun das vorher zwischengespeicherte Packstück 3 aus dem Speicherplatz 11 an den betreffenden leeren Sauger 9 des Rotors 7 abgegeben, so daß aus der vorher fehlerhaften Reihe 27 eine Reihe mit zwei ordnungsgemäßen Packstücken 3 wird, wie es beispielsweise die Reihen 22, 24 und 25 in Fig. 2 zeigen. Diese dann ordnungsgemäße Reihe aus zwei Packstücken 3 ist dann insoweit vollständig, und die beiden ordnungsgemäßen Packstücke 3 werden gleichzeitig in der Stapelbildungsstation 6 abgelegt, wobei das eine Packstück 3 in einen Stapel 32 abgelegt wird, während das andere Packstück 3 in den dahinter befindlichen Stapel 33 abgelegt wird. Auch die Stapelbildungsstation 6 ist mehrbahnig ausgebildet, wie dies bereits für die Abnahmestation 4 und die Fördereinrichtung 2 beschrieben wurde. Man erkennt hieraus bereits, daß bei zweibahniger Ausbildung nur ein einziger Speicherplatz 11 der Zwischenspeicherstation 10 erforderlich ist, in welchem auch immer nur ein ordnungsgemäßes Packstück 3 zwischengespeichert wird. Die Zeit, in der dieses einzige Packstück 3 zwischengespeichert wird, ist relativ kurz bzw. richtet sich danach, wann in einer nachfolgenden Reihe wiederum eine Fehlstelle 29 eine und nur eine Fehlstelle auftritt.

Nun gibt es aber auch den Fall, der in Fig. 2 nicht dargestellt ist, daß nämlich zwei Fehlstellen 29 in mehr oder weniger großem Abstand nacheinander in der gleichen Bahn, z. B. der Bahn 18, auftreten, während die Bahn 19 in den zugehörigen Reihen mit ordnungsgemäßen Packstücken 3 versehen ist. In diesem Fall wird bei der ersten Fehlstelle und für den Fall, daß der Speicherplatz 11 leer ist, der Speicherplatz 11 gemäß Pfeil 30 in Flucht zur Bahn 19 verfahren, so daß er ein ordnungsgemäßes Packstück 3 zwecks Zwischenspeicherung aufnehmen kann. Dieses ordnungsgemäße Packstück 3 wird jedoch dann nachfolgend nicht in der Bahn 19, sondern in der Bahn 18 zum Ausgleich einer dort nachfolgenden Fehlstelle 29 benötigt. Es ist also erforderlich, den Speicherplatz 11 unter Bahnwechsel, nämlich von der Bahn 19 zu der Bahn 18 hin quer zur Förderrichtung 5 gemäß Pfeil 31 zu bewegen, damit der Speicherplatz 11 mit der Bahn 18 fluchtet, bevor das zwischengespeicherte Packstück 3 zur Ergänzung einer vollständigen Reihe in den Förderfluß eingeschleust werden kann. Die beiden sich bei zweibahniger Ausbildung der Stapelbildungsstation 6 bildenden Stapel 32 und 33 (Fig. 1) werden also in jedem Takt der Fördereinrichtung 2 immer nur entweder gleichzeitig mit je einem ordnungsgemäßen Packstück 3 aufgestockt, oder aber es erfolgt bezüglich einer Reihe keine Ablage von ordnungsgemäßen Packstücken 3. Damit ist sichergestellt, daß jeder Stapel 32 und 33 zu jedem Zeitpunkt immer die gleiche Anzahl von ordnungsgemäßen Packstücken 3 enthält. Die Stapel 32 und 33 wachsen also immer gleichmäßig und enthalten zu jedem Zeitpunkt immer die gleiche Anzahl. Die Anzahl der ordnungsgemäßen Packstücke 3 in den Stapeln 32 und 33 ist wählbar bzw. einstellbar. Ein vollständiger Stapel kann beispielsweise zwischen zwei und vielleicht zehn ordnungsgemäße Packstücke 3, beispielsweise Blisterpackungen, enthalten.

Wie in Fig. 1 prinzipiell angedeutet, gehört zu der Übergabevorrichtung 1 noch eine Einrichtung 34 zum Erkennen einer Fehlstelle 29 in den Bahnen 18, 19 usw., eine Überwachungseinrichtung 35 zum Erkennen, ob der Speicherplatz 11 der Zwischenspeicherstation 10 besetzt oder leer ist, ein Rechner 36 zum Ausrechnen, ob die Anzahl der zwischengespeicherten Packstücke 3 zur Bildung einer vollständigen Reihe von Packstücken 3 ausreicht oder nicht, und eine Steuereinrichtung 37 zum gesteuerten Abstimmen der Bewegungen der Zwischenspeicherstation 10, der Fördereinrichtung 2 und der Stapelbildungsstation 6. Wenn Sauger 9 an den Armen 8 des Rotors 7 benutzt werden, versteht es sich, daß eine Unterdruckquelle und entsprechende Steuerventile und Leitungen vorgesehen sein müssen, um ordnungsgemäße Packstücke 3 und/oder Fehlpackungen 13 gezielt anzusaugen, zu fördern und abzulegen oder als Fehlpackungen 13 abzuwerfen. Die Einrichtung 34 und die Überwachungseinrichtung 35 können auch miteinander kombiniert werden. Auch der Rechner 36 kann in diese Einheit einbezogen werden. Hier gibt es für den Fachmann viele Möglichkeiten.

Aus Fig. 1 ist auch erkennbar, daß der Rotor 7 zwar nur drei Arme 8 aufweist, die jedoch mit ihren Saugern 9 in vier über den Umfang verteilt angeordnete Positionen bringbar sind, so relativ zu der Abnahmestation 4, dann relativ zu der Zwischenspeicherstation 10 und dann relativ zu der Stapelbildungsstation 6. An dem vierten dargestellten Positionsplatz befindet sich ein Nachlegeschacht 38, in welchen von Hand ordnungsgemäße Packstücke 3 einbefüllt werden können. Unbedingt erforderlich ist dieser Nachlegeschacht 38 jedoch nicht. Es wird darauf hingewiesen, daß nur ein Nachlegeschacht 38 vorgesehen ist, und zwar auch dann, wenn, wie beschrieben, die Übergabevorrichtung mehrbahnig ausgebildet ist. Das Abarbeiten eines Vorrates an von Hand eingefüllten ordnungsgemäßen Packstücken 3 in dem Nachlegeschacht 38 bzw. aus ihm heraus kann beispielsweise am Ende einer verpackungscharge erfolgen, wobei auch hier die Zwischenspeicherstation 10 für den erforderlichen Bahnwechsel genutzt wird. Wenn z. B. an der Abnahmestation 4 keinerlei Packstücke mehr ankommen und aus dem Nachlegeschacht 38 noch ein Vorrat verarbeitet werden muß, dann geschieht dies so, daß an der Stapelbildungsstelle 6 abwechselnd eine vollständige Reihe und eine Leerreihe ankommen, so daß eine mit der Stapelbildungsstation 6 zusammenwirkende Fördereinrichtung nur eine Stapelabsenkung in jedem zweiten Takt gestattet, bis die Stapel 32 und 33 wieder vollständig sind. Dann schaltet eine hier nur angedeutete Magazinkette die beiden vollständigen Stapel 32 und 33 um einen Takt weiter.

In den Fig. 3 und 4 sind zwei Ausführungsformen für dreibahnige Arbeitsweise verdeutlicht. Es sind hier die Bahnen 18, 19 und 20 jeweils nebeneinander vorgesehen. Es sind wieder ordnungsgemäße Packstücke 3 und Fehlstellen 29 dargestellt. Die Zwischenspeicherstation 10 muß bei dreibahniger Ausführung zwei Speicherplätze aufweisen. Zusätzlich zu dem Speicherplatz 11 ist hier ein weiterer Speicherplatz 39 angedeutet. Beide Speicherplätze 11 und 39 sind bei der Ausführungsform gemäß Fig. 3 in der gleichen Ebene quer zur Förderrichtung 5 angeordnet. Beide Speicherplätze 11 und 39 sind unabhängig voneinander verfahrbar, und zwar derart, daß unabhängig voneinander jeder Speicherplatz 11 bzw. 39 mit jeder der Bahnen 18, 19, 20 in fluchtende Überdeckung gebracht werden kann. Es ist aber nicht möglich, daß beide Speicherplätze 11 und 39 zu einem gemeinsamen Zeitpunkt in Flucht zu nur einer der Bahnen 18, 19, 20 gebracht werden können. Dies ist auch für das vorliegende Verfahren nicht erforderlich.

Die Arbeitsweise gemäß Fig. 3 möge beispielsweise davon ausgehen, daß beide Speicherplätze 11 und 39 leer sind, wenn die Reihe 22 zur Bearbeitung ansteht. Die Reihe 22 weist nur in der Bahn 18 eine Fehlstelle 29 auf, während die Bahnen 19 und 20 ordnungsgemäße Packstücke 3 enthalten. In diesem Falle ist es erforderlich, den Speicherplatz 11 fluchtend zur Bahn 19 und den Speicherplatz 39 fluchtend zur Bahn 20 zu verfahren, und zwar gemäß Pfeil 30. Die beiden ordnungsgemäßen Packstücke 3 der Bahnen 19 und 20 werden zwischengespeichert, so daß die Reihe 22 keinerlei Packstücke mehr enthält, wie es auch sein soll. Steht nun die nächste Reihe 23 zur Bearbeitung an, so hat die Einrichtung 34 und die Überwachungseinrichtung 35 erkannt sowie der Rechner 36 ausgerechnet, daß die beiden vorher zwischengespeicherten ordnungsgemäßen Packstücke ausreichen, um die Reihe 23 zu vervollständigen. Ein seitliches Verfahren unter Bahnwechsel ist hier nicht erforderlich. Die beiden zwischengespeicherten ordnungsgemäßen Packstücke werden an die Stelle der beiden Fehlstellen 29 der Reihe 23 abgegeben, so daß eine vollständige Reihe 23 entsteht, wobei dann sinngemäß gleichzeitig je eines der drei Packstücke an der Stapelbildungsstation 6 in drei verschiedenen Stapeln abgelegt wird. Damit sind die Speicherplätze 11 und 39 wieder leer, und es nähert sich die Reihe 24, die nur in der Bahn 18 eine Fehlstelle 29 aufweist. Dies bedeutet, daß die beiden ordnungsgemäßen Packstücke 3 der Reihe 24 in den beiden Speicherplätzen 11 und 39 wieder zwischengespeichert werden. Die nachfolgende Reihe 25 ist wiederum komplett, so daß die zwischenspeicherstation 10 nicht betätigt werden muß. Die drei ordnungsgemäßen Packstücke 3 der Reihe 25 laufen ohne Ablage durch die zwischenspeicherstation 10 hindurch und gelangen gemeinsam und gleichzeitig zu der Stapelbildungsstation 6. Sodann nähert sich die Reihe 26, die nur in der Bahn 19 ein ordnungsgemäßes Packstück aufweist. Der Speicherplatz 39 befindet sich bereits in Deckung zu der Bahn 20. Der Speicherplatz 11 mit dem darin zwischengespeicherten ordnungsgemäßen Packstück wird nun von der Bahn 19 unter Bahnwechsel mit der Bahn 18 in Flucht gebracht, und die beiden Packstücke werden gleichzeitig an die betreffenden Sauger 9 übergeben, so daß aus der vorher fehlerhaften Reihe 26 wiederum eine komplette Reihe wird. Der Vorgang wiederholt sich dann entsprechend. Im Förderfluß gemäß Förderrichtung 5 nach der Zwischenspeicherstation 10 fallen also nur, wie auch in Fig. 3 dargestellt, komplette Reihen mit ordnungsgemäßen Packstücken 3 oder Leerreihen an. Damit ist sichergestellt, daß auch hier die Stapel an der Stapelbildungsstation 6 gleichmäßig wachsen und aufgebaut werden.

Fig. 4 verdeutlicht ebenfalls eine dreibahnige Anlage mit den Bahnen 18, 19 und 20 nebeneinander. Die beiden Speicherplätze 11 und 39 sind hier nur in zwei Ebenen quer zur Förderrichtung 5 angeordnet. Diese Anordnung kann für die freie Verfahrbarkeit zum Bahnwechsel Vorteile erbringen, bedeutet aber umgekehrt nachteilig, daß praktisch auch zwei räumlich getrennte Zwischenspeicherstationen 10 über den Umfang des Rotors 7 verteilt angeordnet sind, wenn nicht besondere Maßnahmen ergriffen sind, die nur die Anordnung einer Zwischenspeicherstation 10 erforderlich machen, wie dies in Fig. 3 angedeutet ist. Die Arbeitsweise ist sinngemäß die gleiche wie voranstehend bereits erläutert.

In den Fig. 5, 6 und 7 sind jeweils mehrbahnige Anlagen mit den Bahnen 18, 19, 20 und 21 dargestellt. Hier kommt noch ein dritter Speicherplatz 40 an der Zwischenspeicherstation 10 hinzu, wobei die einzelnen Ausführungsformen auf den bereits beschriebenen Ausführungsformen für die zwei- und dreibahnigen Ausführungen der Fig. 2 bis 4 aufbauen. Es könnten ohne weiteres auch Ausführungsbeispiele für fünf- oder sechsbahnige Arbeitsweise aufgezeigt werden. Die Anlagen werden dann aber immer etwas komplizierter. Anhand der Darlegungen ist erkennbar, daß die Anzahl der erforderlichen Speicherplätze immer um 1 kleiner ist als die Anzahl der Bahnen. Es können in den Speicherplätzen maximal immer nur eine solche Anzahl von ordnungsgemäßen Packstücken 3 zwischengespeichert werden, die um 1 kleiner ist als die Anzahl der Bahnen. All dies zielt darauf ab, einerseits möglichst wenige ordnungsgemäße Packstücke überhaupt zwischenzuspeichern und dann die Zeit, für die eine Zwischenspeicherung erfolgt, möglichst gering zu halten.

### BEZUGSZEICHENLISTE

- 1 -: Übergabevorrichtung
- 2 -: Fördereinrichtung
- 3 -: Packstück
- 4 -: Abnahmestation
- 5 -: Förderrichtung
- 6 -: Stapelbildungsstation
- 7 -: Rotor
- 8 -: Arm
- 9 -: Sauger
- 10 -: Zwischenspeicherstation
- 11 -: Speicherplatz
- 12 -: Auswurfstation
- 13 -: Fehlpackung
- 14 -: Leitschacht
- 15 -: Leitschacht
- 16 -: Behälter
- 17 -: Behälter
- 18 -: Bahn
- 19 -: Bahn
- 20 -: Bahn

- 21 -: Bahn
- 22 -: Reihe
- 23 -: Reihe
- 24 -: Reihe
- 25 -: Reihe
- 26 -: Reihe
- 27 -: Reihe
- 28 -: Reihe
- 29 -: Fehlstelle
- 30 -: Pfeil
- 31 -: Pfeil
- 32 -: Stapel
- 33 -: Stapel
- 34 -: Einrichtung
- 35 -: Überwachungseinrichtung
- 36 -: Rechner
- 37 -: Steuereinrichtung
- 38 -: Nachlegeschacht
- 39 -: Speicherplatz
- 40 -: Speicherplatz

## Patentansprüche

1. Verfahren zur Übergabe von einzelnen Packstücken (3) von einer Abnahmestelle (4) an eine Stapelbildungsstelle (6), wobei die Packstücke der Abnahmestelle mehrbahnig reihenweise zugeführt und von einer Übergabevorrichtung (1) mehrbahnig reihenweise übernommen und schadhafte Packstücke ersetzt werden, so daß nur ordnungsgemäße Packstücke an der Stapelbildungsstelle gesammelt werden, **dadurch gekennzeichnet, daß** beim Auftreten einer Fehlstelle in einer der Bahnen (18, 19, 20, 21) das ordnungsgemäße Packstück dieser Reihe von der der Fehlstelle benachbarten Bahn abgenommen und bis zum Auftreten einer nachfolgenden Fehlstelle zwischengespeichert wird, es sei denn, daß ein bereits zwischengespeichertes Packstück vorhanden ist, das dann zum Ausgleich der Fehlstelle und unter Bildung einer vollständigen Reihe in den Förderfluß der Packstücke eingeschleust wird, so daß nur vollständige Reihen ordnungsgemäßer Packstücke an der Stapelbildungsstelle gesammelt werden.

2. Verfahren nach Anspruch 1, **dadurch gekennzeichnet, daß** beim Auftreten von mindestens zwei Fehlstellen nacheinander in einer der Bahnen das ordnungsgemäße zwischengespeicherte Packstück aus der die erste Fehlstelle enthaltenden Bahn unter Bahnwechsel quer zur Förderrichtung der Packstücke bewegt und in die die zweite Fehlstelle aufweisende Bahn unter Bildung einer vollständigen Reihe eingeschleust wird.

3. Verfahren nach einem der Ansprüche 1 oder 2, **dadurch gekennzeichnet, daß** bei zweibahniger Zufuhr der Packstücke zu der Abnahmestelle nur ein ordnungsgemäßes Packstück zwischengespeichert und beim Auftreten der nachfolgenden Fehlstelle sogleich dann zum Ausgleich dieser Fehlstelle und damit unter Bildung einer vollständigen Reihe aus zwei Packstücken in den Förderfluß der Packstücke eingeschleust wird.

4. Verfahren nach einem der Ansprüche 1 oder 2, **dadurch gekennzeichnet, daß** bei mindestens dreibahniger Zufuhr der Packstücke zu der Abnahmestelle ein oder mehrere ordnungsgemäße Packstücke zwischengespeichert werden, daß ordnungsgemäße Packstücke beim Auftreten von nachfolgenden Fehlstellen entweder zum Ausgleich dieser Fehlstelle und damit unter Bildung einer vollständigen Reihe aus mehreren Packstücken in den Förderfluß der Packstücke eingeschleust wird bzw. werden, oder, wenn die Bildung einer vollständigen Reihe nicht möglich ist, unter Erzeugung einer Leerreihe das oder die ordnungsgemäßen Packstücke zwischengespeichert werden.

5. Übergabevorrichtung zur Durchführung des Verfahrens nach einem der Ansprüche 1 bis 4, mit einer Abnahmestation (4), einer zumindest einen Rotor (7) aufweisenden Fördereinrichtung (2) und einer Stapelbildungsstation (6), wobei die Abnahmestation (4), die Fördereinrichtung (2) und die Stapelbildungsstation (6) mehrbahnig ausgebildet sind, **dadurch gekennzeichnet, daß** eine Zwischenspeicherstation (10) vorgesehen ist, deren Speicherplatz (11) unter Bahnwechsel quer zur Förderrichtung (5) der Packstücke (3) bewegbar und dessen zwischengespeichertes Packstück (3) in den Förderfluß einer eine Fehlstelle aufweisenden Bahn unter Bildung einer vollständigen Reihe (27) einschleusbar ist, daß eine Einrichtung (34) zum Erkennen einer Fehlstelle in den mehreren Bahnen, eine Überwachungseinrichtung (35) zum Erkennen, ob der Speicherplatz (11) der zwischenspeicherstation (10) besetzt oder leer ist, ein Rechner (36) zum Ausrechnen, ob die Anzahl der zwischengespeicherten Packstücke (3) zur Bildung einer vollständigen Reihe (27) von Packstücken (3) ausreicht oder nicht, und eine Steuereinrichtung (37) zum gesteuerten Abstimmen der Bewegungen der Zwischenspeicherstation (10), der Fördereinrichtung (2) und der Stapelbildungsstation (6) vorgesehen sind.

6. Übergabevorrichtung nach Anspruch 5, **dadurch gekennzeichnet, daß** die Anzahl der Speicherplätze (11, 39, 40) der zwischenspeicherstation (10) um 1 kleiner ist als die Anzahl der Bahnen (18, 19, 20, 21) quer zur Förderrichtung (5).

7. Übergabevorrichtung nach einem der Ansprüche 5 oder 6, **dadurch gekennzeichnet, daß** der Rotor (7) der Fördereinrichtung (2) mindestens drei mehrbahnig arbeitende Arme (8) aufweist, die gleichmäßig verteilt über den Umfang des Rotors (7) angeordnet sind, und daß jeder Arm (8) beim Umlauf des Rotors (7) in der Folge nacheinander mit der Abnahmestation (4), der Zwischenspeicherstation (10) und der Stapelbildungsstation (6) in Wirkkontakt kommt.

8. Übergabevorrichtung nach einem der Ansprüche 5 bis 7, **dadurch gekennzeichnet, daß** die Steuereinrichtung (37) zum gesteuerten Abstimmen der Bewegungen der Zwischenspeicherstation (10), der Fördereinrichtung (2) und der Stapelbildungsstation (6) so ausgebildet ist, daß beim Zusammenspiel zwischen der Fördereinrichtung (2) und der Stapelbildungsstation (6) entweder nur eine vollständige Reihe (27) von Packstücken (3) bei jedem Takt der Fördereinrichtung (2) gemeinsam übergeben oder bei einem Takt keinerlei Packstücke (3) übergeben werden, wobei in letzterem Fall die Steuereinrichtung (37) das Weiterschalten eines Taktes der Stapelbildungsstation (6) unterdrückt.

9. Übergabevorrichtung nach einem der Ansprüche 5 bis 8, **dadurch gekennzeichnet, daß** ein Nachlegeschacht (38) zum manuellen Einführen von ordnungsgemäßen Packstücken (3) vorgesehen ist.

10. Übergabevorrichtung nach einem der Ansprüche 5 bis 9, **dadurch gekennzeichnet, daß** der Fördereinrichtung (2) eine Auswurfstation (12) zum Abwerfen von Leer- und Fehlpackungen (13) zugeordnet ist.

## Claims

1. A method of transferring packing units (3) from a receiving station (4) to a stack building station (6), in which the packing units are delivered to the receiving station in a plurality of rows and in a plurality of tracks, and the packing units in a plurality of rows and in a plurality of tracks are accepted at a transfer apparatus (1), and all packing units of undesired properties are replaced so that only packing units of desired properties are collected at the stack building station, **characterized in that** in case an empty space in one of the tracks (18, 19, 20, 21) should occur the one packing unit of desired properties of this row is taken from the track besides having the empty space and is stored until a following empty space occurs, unless a packing unit of desired properties is stored already which is fed in the stream of the packing units to compensate an empty space and to form a complete row, so that only complete rows of packing units of desired properties are collected at the stack building station.

2. The method of claim 1, **characterized in that** in case of at least two following empty spaces one after the other in one of the tracks the stored packing unit of desired properties coming from a track showing the first empty space is moved transverse to the conveying direction of the packing units and is fed in the track showing the second empty space to form a complete row.

3. The method of claim 1 or 2, **characterized in that** in case of delivering the packing units to the receiving station in two tracks of packing units, only one packing unit of desired properties is stored, and in case of a further empty space the stored packing unit of desired properties is fed into the row to compensate the empty space to form a complete row including two packing units of desired properties.

4. The method of claim 1 or 2, **characterized in that** in case of delivering the packing units to the receiving station in at least three tracks of packing units, one or more packing units of desired properties are stored, and in case of following empty spaces packing units of desired properties is or are fed into the stream of packing units to compensate the empty space to form a complete row of a number of packing units, or in case the forming of a complete row is not possible the one or more packing units of the desired properties are stored to form an empty row.

5. A transfer apparatus to perform the method of one of the claims 1 to 4, comprising a receiving station (4), a conveying device (2) having at least one rotor (7), and a stack building station (6), the receiving station (4), the conveying device (2) and a stack building station (6) being designed and arranged to convey the packing units arriving in a plurality of tracks, **characterized in that** a storing station (10) is designed and arranged, the storing location (11) of which being movable transverse to the conveying direction (5) of the packing units to change the track and the stored packing unit (3) being to be fed in the track showing an empty space to form a complete row (27), **in that** a detecting device (34) to detect a packing unit of undesired properties in the plurality of tracks, an observing device (35) to observe if the storing location (11) of the storing station (10) is occupied or not by a packing unit, a processor (36) to calculate if the number of stored packing units (3) is sufficient or not to form a complete row (27) of packing units (3), and **in that** a control device (37) is designed and arranged to control the movements of the storing station (10), the conveying device (2) and the stack building station (6) with respect to one another.

6. The apparatus of claim 5, **characterized in that** the number of storing locations (11, 39, 40) of the storing station (10) is less than the number of tracks (18, 19, 20, 21) being located transverse to the conveying direction (5) by 1.

7. The apparatus of one of the claims 5 Or 6, **characterized in that** the rotor (7) of the conveying device (2) includes at least three arms (8) working with the tracks and being arranged equally spaced apart about the circumference of the rotor (7), and **in that** during a rotation of the rotor (7) each of the three arms (8) gets into contact with the receiving station (4), the storing station (10) and the stack forming station (6) one after the other.

8. The apparatus of one of the claims 5 to 7, **characterized in that** the control device (37) to control the movements of the storing station (10), the conveying device (2) and the stack building station (6) with respect to one another is designed and arranged to either transfer a complete row (27) of packing units (3) or a complete empty row at each cycle of the conveying device, in case of an empty row being transferred, the cycle of the stack building station (6) is stopped.

9. The apparatus of one of the claims 5 to 8, **characterized in that** an extra supply unit (38) is located to manually insert packing units (3) of desired properties.

10. The apparatus of one of the claims 5 to 9, **characterized in that** an ejecting station (12) for ejecting empty packages or packages of undesired properties is allocated to the conveying device (2).

## Revendications

1. Procédé de transfert de paquets (3) individuels depuis un poste de réception (4) vers un poste d'empilage (6), les paquets étant acheminés par files de plusieurs bandes vers le poste de réception et étant reçus par files de plusieurs bandes par un dispositif de transfert (1) et des paquets défectueux étant remplacés, de telle sorte que seuls des paquets corrects sont collectés dans le poste d'empilage, **caractérisé en ce que**, en cas d'apparition d'un emplacement défectueux dans l'une des bandes (18, 19, 20, 21), le paquet correct de cette file est prélevé dans la bande adjacente à l'emplacement défectueux et est stocké temporairement jusqu'à l'apparition d'un prochain emplacement défectueux, à moins qu'un paquet déjà stocké temporairement soit disponible, lequel est alors introduit dans le flux de transport des paquets pour compenser l'emplacement défectueux et former une file complète, de telle sorte que seulement des files complètes de paquets corrects sont collectées dans le poste d'empilage.

2. Procédé selon la revendication 1, **caractérisé en ce que**, en cas d'apparition d'au moins deux emplacements défectueux consécutifs dans l'une des bandes, le paquet correct stocké temporairement est déplacé hors de la bande contenant le premier emplacement défectueux moyennant un changement de bande perpendiculairement à la direction de transport et est introduit dans la bande contenant le deuxième emplacement défectueux moyennant la formation d'une file complète.

3. Procédé selon la revendication 1 ou 2, **caractérisé en ce qu'**en cas d'acheminement des paquets sur deux bandes vers le poste de réception, seul un paquet correct est stocké temporairement et, lors de l'apparition du prochain emplacement défectueux, est alors immédiatement introduit dans le flux de transport des paquets pour compenser cet emplacement défectueux et former ainsi une file complète de deux paquets.

4. Procédé selon la revendication 1 ou 2, **caractérisé en ce qu'**en cas d'acheminement des paquets sur au moins trois bandes vers le poste de réception, un ou plusieurs paquets corrects sont stockés temporairement, **en ce que**, lors de l'apparition de prochains emplacements défectueux, des paquets corrects sont introduits dans le flux de transport des paquets pour compenser ces emplacements défectueux et former ainsi une file complète de plusieurs paquets, ou lorsque la formation d'une file complète n'est pas possible, le ou les paquets corrects sont stockés temporairement moyennant la formation d'une file vide.

5. Dispositif de transfert pour la mise en oeuvre du procédé selon l'une quelconque des revendications 1 à 4, comportant un poste de réception (4), un dispositif de transport (2) muni d'au moins un rotor (7), et un poste d'empilage (6), le poste de réception (4), le dispositif de transport (2) et le poste d'empilage (6) étant réalisés à plusieurs bandes, **caractérisé en ce qu'**il est prévu un poste de stockage intermédiaire (10), dont la place de stockage (11) peut être déplacée moyennant un changement de bande perpendiculairement à la direction de transport (5) des paquets (3) et dont le paquet (3) stocké temporairement peut être introduit dans le flux de transport d'une bande contenant un emplacement défectueux moyennant la formation d'une file complète (27), **en ce qu'**il est prévu un dispositif (34) pour détecter un emplacement défectueux dans plusieurs bandes, un dispositif de contrôle (35) pour détecter si la place de stockage (11) du poste de stockage temporaire (10) est occupée ou vide, un ordinateur (36) pour calculer si le nombre de paquets (3) stockés temporairement suffit ou non pour former une file complète (27) de paquets (3), et un poste de commande (37) pour une synchronisation commandée des mouvements du poste de stockage temporaire (10), du dispositif de transport (2) et du poste d'empilage (6).

6. Dispositif de transfert selon la revendication 5, **caractérisé en ce que** le nombre de places de stockage (11, 39, 40) du poste de stockage temporaire (10) est inférieur de 1 au nombre de bandes (18, 19, 20, 21) perpendiculairement à la direction de transport (5).

7. Dispositif de transfert selon la revendication 5 ou 6, **caractérisé en ce que** le rotor (7) du dispositif de transport (2) comporte au moins trois bras (8) travaillant sur plusieurs bandes, qui sont disposés en étant répartis uniformément sur le pourtour du rotor (7), et **en ce que**, lors de la rotation du rotor (7), chaque bras (8) est amené ensuite successivement en contact actif avec le poste de réception (4), le poste de stockage temporaire (10) et le poste d'empilage (6).

8. Dispositif de transfert selon l'une quelconque des revendications 5 à 7, **caractérisé en ce que** le dispositif de commande (37) pour la synchronisation commandée des mouvements du poste de stockage temporaire (10), du dispositif de transport (2) et du poste d'empilage (6) est configuré de telle sorte que, lors d'une coopération entre le dispositif de transport (2) et le poste d'empilage (6), soit une seule file complète (27) de paquets (3) est transférée conjointement à chaque cycle du dispositif de transport (2), soit aucun paquet (3) n'est transféré au moment d'un cycle, sachant que dans ce dernier cas, le dispositif de commande (37) empêche le passage vers un cycle suivant du poste d'empilage (6).

9. Dispositif de transfert selon l'une quelconque des revendications 5 à 8, **caractérisé en ce qu'**il est prévu une cage d'introduction (38) pour introduire manuellement des paquets (3) corrects.

10. Dispositif de transfert selon l'une quelconque des revendications 5 à 9, **caractérisé en ce qu'**un poste d'éjection (12) pour éjecter des paquets vides ou défectueux (13) est associé au dispositif de transport (2).
